# EUROPEAN PATENT APPLICATION

(11) **EP 0 945 789 A2**
(43) Date of publication of application: **29.09.1999**
(21) Application number: 99301513.0
(22) Date of filing: 01.03.1999
(51) Int. Cl.: G06F 9/44

(54) **Data processing apparatus, method and computer program product facilitating polymorphic behaviour from static object interfaces**

(30) Priority: 27.03.1998 GB 9806468
(71) Applicant: International Business Machines Corporation, Armonk, NY 10504 (US)
(72) Inventor: Charters, Graham Castree, Winchester, Hampshire SO22 4LR (GB); Vines, David John, Romsey, Hampshire SO51 8PB (GB)
(74) Representative: Moss, Robert Douglas

(57) **Abstract**

A data processing apparatus which carries out data processing using an object-oriented programming software architecture having two inheritance hierarchies one of which is a static class hierarchy and the other of which is a non-static class hierarchy, is disclosed, the apparatus having: a means for receiving method calls on a static class of a static hierarchy, each method call requesting that a particular method be processed by the data processing apparatus; and a means for using a static pointer in the static class to redirect a received method call to an instance of a non-static class of the non-static hierarchy, wherein the instance provides the implementation of the method requested in the received method call.

## Description

### Field of the Invention

The present invention relates to the field of data processing, and more specifically, data processing using object-oriented programming software techniques.

### Background of the Invention

In the field of data processing, object-oriented programming (OOP) has become the preferred way of dealing with computer software. With OOP, related data and commands for processing the data are encapsulated into an entity called an object. In order to carry out data processing, a calling object sends a message to another object (a called object) asking the called object to carry out one of the called object's commands. The called object receives the message and carries out the command on its encapsulated data. Thus, the names of the commands (known as "methods") are made known to each object so that an object can call another object to ask the called object to carry out the method. This has the advantage of hiding within each object the details of the object's methods and the data upon which the methods will operate. This allows easy reuse of common data processing functions.

Objects which share common features (e.g., similar data and/or methods) are grouped together into a "class". An object is known as an instantiation of a class, which means that the object is a member of the class which is being activated at the present time. Classes can be arranged hierarchically so that one class derives from another, with the derived class being called a "subclass" of the class from which it derives.

Oftentimes, it is necessary to have a class from which only a single instance exists. This is often referred to as a singleton class. One way to implement such a class is described by E. Gamma et al, *Design Patterns,* Addison-Wesley Publishing Co., 1995, p. 127-134. In this reference, the class itself provides a method to obtain a single instance which can then be used to call non-static methods on the class. However, since this requires the instance to be obtained before a call can be made, this has proven to be time consuming to use. Further, this requires the single instance to be exposed as a global variable, and to be thus subject to misuse or corruption.

Another way to implement such a class is to make all methods and data static (each method always performs the same predetermined function on the same data), and this type of class will be referred to hereinafter as a "static" class. This has the advantage of allowing a calling program to make use of the class via a single method call without having to first instantiate or obtain an instance from the class. It is thus often advantageous to use static classes in object-oriented design of a data processing system.

However, the problem which goes along with selecting static classes is that they are programmed to carry out their predetermined action and are not prone to being changed from such a direct course, because of the very nature of their static architecture. This makes providing alternative functionality (often done using the object-oriented concept of polymorphism, which allows calls made on a base class to exhibit a number of different behaviours which are provided in classes derived from the base class) very difficult when static classes are implemented in a system. The software that issues the calls could be changed to call a different class, but this is very undesirable as such calling architectures are already established and reworking them would cause hardship in terms of software reworking which would be duplicated for each calling architecture that desires to call the static class.

One possible way to add polymorphic behaviour to a static class would be to configure a non-static subclass of a static base class, as has been proposed by International Business Machines Corp. in its copending European Patent Application No. 97114041.3 filed August 14, 1997. With this architecture, when a method call comes in to an object which is instantiated from the static base class, a test is done to determine whether the non-static subclass is configured and if it is, the method call is forwarded to the subclass for processing. If the subclass is not configured, the method call is processed by a default non-static implementation shared by a number of static classes. Thus, this architecture involves overriding a single method using a specially configured non-static subclass. This technique has the advantage of keeping the processing steps inside of the class structure that receives the method call (without exposing a variable globally). However, this technique suffers from the limitation that it overrides only a single method and that thus a different subclass would have to be configured if a different method is to be given polymorphic behaviour (thus increasing the number of total classes used). Another disadvantage is that a test must be carried out to determine whether the subclass is configured, thus adding to the amount of processing which must be carried out by the data processor.

Thus, a need exists in the art for a better way of providing polymorphic behaviour for static classes in a data processing system.

### Summary of the Invention

According to one aspect, the present invention provides a data processing apparatus as claimed in claim 1.

Preferably, the means for receiving method calls receives the calls on a static base class of said static hierarchy and the means for using a static pointer redirects a received method call to an instance of a non-static base class of the non-static hierarchy.

Further preferably, the means for using a static pointer redirects a received method call to an instance of a non-static derived class of the non-static class hierarchy, when an implementation of the received method call contained in the non-static base class has been overridden by a modified implementation of the received method call contained in the non-static derived class.

According to a second aspect, the invention provides a method of carrying out the functionality of the data processing apparatus described above in the first aspect.

According to a third aspect, the invention provides a computer program product stored on a computer readable storage medium for, when run on a computer, carrying out the functionality of the first aspect.

The ability to provide polymorphic behaviour to a static class interface is highly advantageous. without polymorphic behaviour, a static class interface is limited to performing the static functions for which it was originally designed. This greatly limits the ability to reuse the calling software code that calls the static interface, as such calling code could only be reused in a context where the static interface must perform the same function all the time. By providing such static interfaces with polymorphic behaviour, alternative functions for certain methods can be provided, thus greatly increasing the reuse of calling code that calls the static interfaces. This avoids having to write new code in situations where a static interface exists but its behaviour needs to be modified with respect to at least one of its methods.

Thus, with the present invention, polymorphic behaviour can be given to static classes without the need to expose a variable globally (as was required in the Gamma et al technique described above). In addition, as an entire class is overridden instead of only a method thereof, the number of total classes can be decreased, while also decreasing the amount of data processing involved because the automatic referral involved in the invention does away with the need to carry out a test to determine whether a specially configured subclass exists (as in the technique of the European patent application described above).

### Brief Description of the Drawings

An embodiment of the present invention will now be described while making reference to the following drawing figures:
Figure 1 is a block diagram showing the environment in which the preferred embodiment of the present invention operates;
Figure 2 is a block diagram showing the object-oriented software structure used to carry out data processing according to a preferred embodiment of the present invention; and
Figure 3 is a block diagram showing the static base class of Fig. 2 in more detail.

### Detailed Description of the Preferred Embodiments

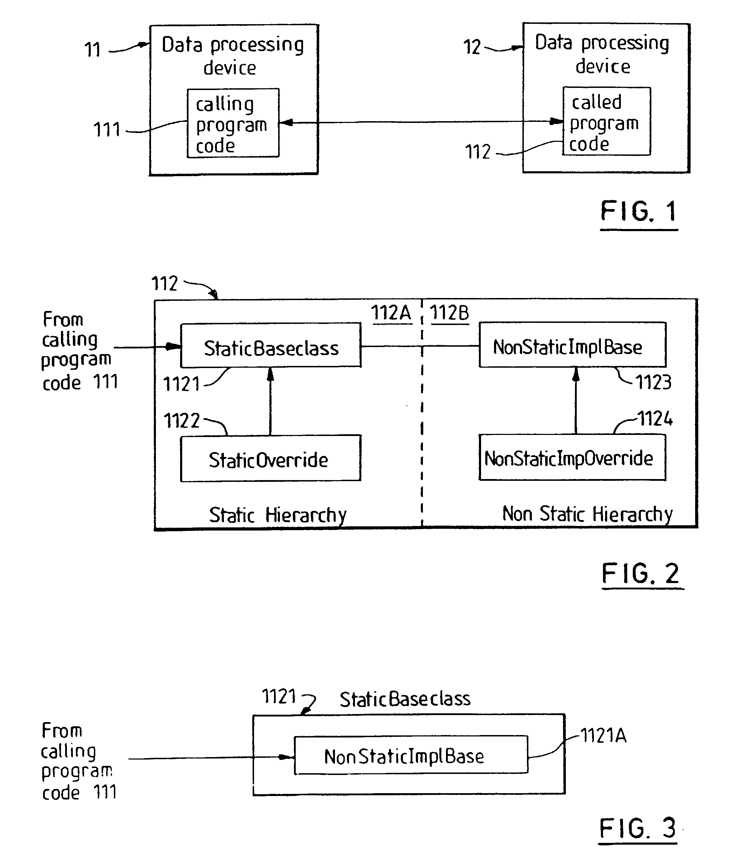

As shown in Fig. 1, the environment in which the preferred embodiment of the present invention operates is that in which a first data processing device 11 (which is, for example, a standard personal computer) is running a scftware program 111 which will be referred to as a calling program code, because this software program 111 is making a call to another data processing device 12 to ask that device 12 to perform some work on behalf of the first device 11. Correspondingly, the second device 12 is running a software program 112 which will be referred to as a called program code, because software program 112 is receiving the call from the first data processing device 11. The device 12 will use its called program code 112 to carry out the data processing work that the calling program code 111 is requesting.

The two data processing devices communicate with each other over a network using standard network communications protocols. It should be noted that the calling program code 111 and the called program code 112 could be located in the same data processing device, and thus there would be no need for a network to communicate the work request, as such would take place internally to the single data processing device involved.

In order to provide for polymorphic behaviour, it is necessary that when a method call is received by the called program code 112, the implementation of the corresponding method can be changeable. Otherwise, whenever a method call comes in, the same method implementation will always be used to process the method call. A calling program 111 that calls such a static interface is not susceptible to being reused because the function of the called program code 112 is too limiting. The calling program code 111 can be made much more reusable if the called program code 112 can be made to exhibit polymorphic behaviour.

The called program code 112 is structured according to object-oriented programming techniques as shown in Fig. 2. As can be seen in Fig. 2, there are two hierarchies included in the software architecture: static hierarchy 112A and non-static hierarchy 112B. Static hierarchy 112A includes a base class called StaticBase class 1121 and a derived class StaticOverride 1122 which is derived from StaticBase class 1121. Likewise, non-static hierarchy 112B includes a base class called NonStaticImplBase class 1123 and a derived class NonStaticImplOverride class 1124 which is derived from NonStaticImplBase class 1123.

The calling program code 111 issues work requests (called method calls hereinafter, since the calling code 111 is invoking methods on the called code 112 to ask the called code 112 to do some specific work which is identified by the method name) which are received by the called code 112 via the called code's StaticBase class 1121. The calling program code 111 is said to be making calls to the "static interface" of the StaticBase class 1121. Upon receiving any method call from calling program code 111 via the static interface, the called code's StaticBase class 1121 forwards the call to the method's implementation via a pointer 1121a (see Fig. 3) to the NonStaticImplBase class 1123. The method call is then processed by the data processing device 12 according to the instructions contained in the method's implementation.

A method's implementation can be provided by the NonStaticImplBase class 1123. That is, for each of the static methods in the StaticBase class 1121, an implementation can be found in the NonStaticImplBase class 1123, and thus when incoming calls are received by the StaticBase class 1121, the calls are forwarded to the NonStaticImplBase class 1123 for processing. When an alternative behaviour is required for any number of methods of the static base class 1121, the non-static class 1124 implementing the new behaviour is derived from the non-static base class 1123. This new implementation is then substituted for the old implementation that was originally provided by the non-static base class 1123. This is done by deriving a static class 1122 from the base class 1121, thus providing access to the pointer 1121A from this static derived class 1122. Then, when incoming calls are received by the StaticBase class 1121, the calls are forwarded to the NonStaticImplBase class 1123 via the pointer and if the method has been implemented in the derived class 1124 then it is this implementation that is called to carry out the data processing requested by the method call.

Thus, the calling code 111 can still send its method calls to the StaticBase class 1121, and thus the code 111 does not need to be altered. That is, the code 111 "thinks" that the StaticBase class 1121 will be implementing the calls, but in fact, the StaticBase class 1121 forwards the calls on, via the static pointer, to the NonStaticImplBase class 1123, which provides an implementation of the calls.

Then, should it be desired to modify the behaviour provided in the implementation included in the non-static base class 1123, an alternative behaviour for one or more methods can be provided by deriving a subclass 1124 of the base class 1123 and including the implementation of the new behaviour in this subclass 1124. Thus, when a method call comes in to the static base class 1121, the call is redirected, via the static pointer, to call what it believes is the non-static base class 1123, but in fact, it is the subclass 1124 that actually receives the call because the subclass 1124 has overridden the base class 1123 with respect to the method that is now being called.

An example pseudo-code implementation of the invention will now be provided: 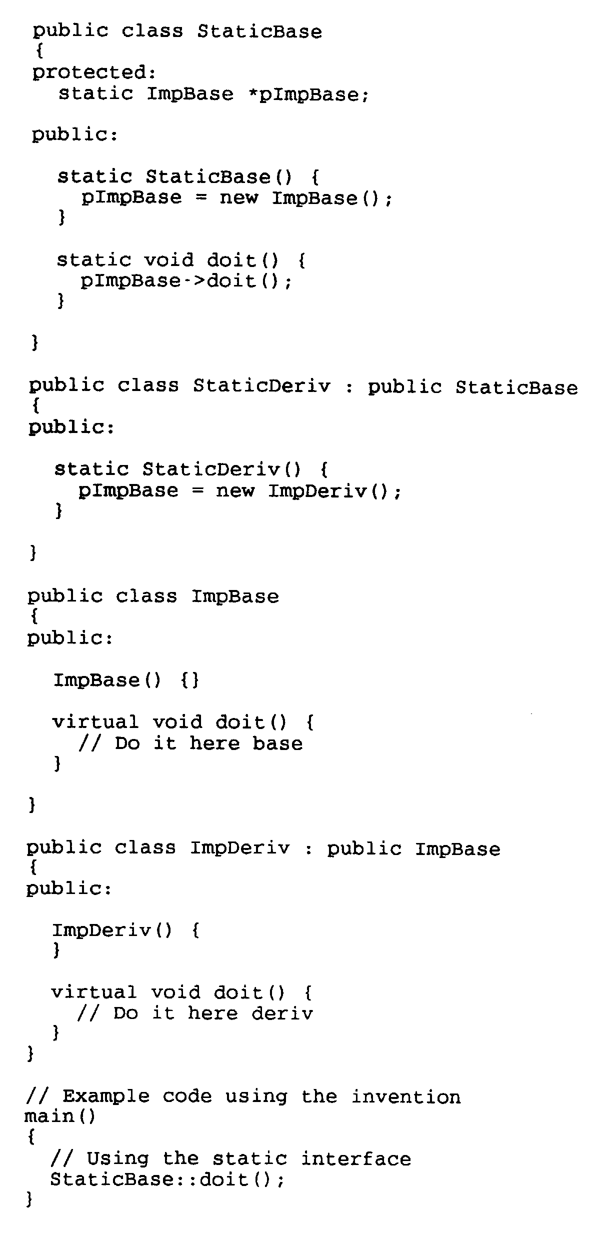 The code above highlights the main points of the invention, but of course, the invention is not limited to this implementation. For example, the substitution of the new implementation class (ImpDeriv) is shown being done in the StaticDeriv constructor, but this could be done in any method in the StaticDeriv class, and is not limited to the substitution of one alternative implementation class. In an environment where the Deriv classes are not defined, the call "StaticBase::doit()" shown in the "main()" above will result in the doit() in ImpBase being called. The same call in an environment where the "Deriv" classes are defined would result in the doit() method in ImpDeriv being called, thus not requiring the code in "main()" to be changed.

### Example Usage:

The inventors have made use of this invention to implement debug tracing in a Java environment. Two tracing mechanism were required: one where the code being traced was to be used in a stand alone environment (including the base classes 1121 and 1123), and the other where the code was to be used inside a server environment (including the derived classes 1122 and 1124) which supplied its own tracing facilities. Hence the requirement for code to be able to perform static trace calls which should be able to go to either a stand alone trace file (in static base class 1123), or the server trace file (in derived non-static class 1124), without having to change the code.

## Claims

1. A data processing apparatus which carries out data processing using an object-oriented programming software architecture having two inheritance hierarchies one of which is a static class hierarchy and the other of which is a non-static class hierarchy, said apparatus comprising:
means for receiving method calls on a static class of said static hierarchy, each method call requesting that a particular method be processed by said data processing apparatus; and
means for using a static pointer in the static class to redirect a received method call to an instance of a non-static class of said non-static hierarchy, wherein said instance provides the implementation of the method requested in said received method call.

2. The apparatus of claim 1 wherein said means for receiving method calls receives said calls on a static base class of said static hierarchy and said means for using a static pointer redirects a received method call to an instance of a non-static base class of said non-static hierarchy.

3. The apparatus of claim 1 wherein said means for using a static pointer redirects a received method call to an instance of a non-static derived class of said non-static class hierarchy, when an implementation of said received method call contained in the non-static base class has been overridden by a modified implementation of said received method call contained in the non-static derived class.

4. A data processing method using an object-oriented programming software architecture having two inheritance hierarchies one of which is a static class hierarchy and the other of which is a non-static class hierarchy, said method having steps of:
receiving method calls on a static class of said static hierarchy, each method call requesting that a particular method be processed by said data processing method; and
using a static pointer in the static class to redirect a received method call to an instance of a non-static class of said non-static hierarchy, wherein said instance provides the implementation of the method requested in said received method call.

5. The method of claim 4 wherein said step of receiving method calls receives said calls on a static base class of said static hierarchy and said step of using a static pointer redirects a received method call to an instance of a non-static base class of said non-static hierarchy.

6. The method of claim 4 wherein said step of using a static pointer redirects a received method call to an instance of a non-static derived class of said non-static class hierarchy, when an implementation of said received method call contained in the non-static base class has been overridden by a modified implementation of said received method call contained in the non-static derived class.

7. A computer program product stored on a computer readable storage medium for, when executed on a data processing apparatus, carrying out a data processing method using an object-oriented programming software architecture having two inheritance hierarchies one of which is a static class hierarchy and the other of which is a non-static class hierarchy, said method having steps of:
receiving method calls on a static class of said static hierarchy, each method call requesting that a particular method be processed by said data processing method; and
using a static pointer in the static class to redirect a received method call to an instance of a non-static class of said non-static hierarchy, wherein said instance provides the implementation of the method requested in said received method call.

8. The product of claim 7 wherein said step of receiving method calls receives said calls on a static base class of said static hierarchy and said step of using a static pointer redirects a received method call to an instance of a non-static base class of said non-static hierarchy.

9. The product of claim 7 wherein said step of using a static pointer redirects a received method call to an instance of a non-static derived class of said non-static class hierarchy, when an implementation of said received method call contained in the non-static base class has been overridden by a modified implementation of said received method call contained in the non-static derived class.
